# EUROPEAN PATENT APPLICATION

(11) **EP 4 538 913 A1**
(43) Date of publication of application: **16.04.2025**
(21) Application number: 23203032.0
(22) Date of filing: 11.10.2023
(51) Int. Cl.: G06F 21/60, H04N 1/32

(54) **IMPROVED DATA EMBEDDING INVOLVING TEXT**

(71) Applicant: Televic Education NV, 8870 Izegem (BE)
(72) Inventor: De Donder, Xavier, B-8870 Izegem (BE); Deschrijver, Yoeri, B-8020 Ruddervoorde (BE)
(74) Representative: Rogiest, Wouter

(57) **Abstract**

The invention provides, amongst other aspects, a method for embedding a bit sequence, comprising: providing the bit sequence and a text string comprising words; identifying, among the words comprised in the text string, carrier strings suitable for embedding; generating formatting data associated with said text string, said formatting data comprising instructions for embedding, within the respective identified carrier strings, respective bits of the bit sequence; wherein the identifying of carrier strings comprises identifying, for each carrier string, one or more carrier words such that the carrier string comprises at least two spaces, the spaces being letter spaces or word spaces; wherein the embedding of a respective bit relates to altering each of the letter spaces and/or each of the word spaces of the respective carrier string so that the sum of altered spaces if the value of the bit is zero is distinguishable from the sum of altered spaces if the value of the bit is one.

## Description

### Field of the invention

The present invention relates to an improved method for embedding data in a text. Particularly, the invention relates to embedding a bit sequence in a text string, so that it is not apparent, or even goes unnoticed, that a bit sequence is embedded.

### Background art

Digital watermarking is a well researched area in the signal processing community. Many techniques have been devised to hide information covertly in text and image documents. Hiding data within context data without scrambling the context data is commonly termed "steganography", as opposed to cryptography, which typically involves a form of scrambling the context data as part of the embedding.

Steganography may be very useful in cases where multiple copies of confidential digital information are distributed, and it is desired to detect the origin of improper information disclosure. This may relate to providing a form of "canary trap" in the digital information, whereby a leaked copy contains embedded data that allows to track back the leaked copy to the person who received the leaked copy, based on a form of fingerprint embedded in the digital information, whereby the fingerprint is preferably hidden covertly in the digital information.

Steganography for text and image documents differs greatly since modifying pixels in an image has much less visual effect than modifying pixels in text. Therefore, existing steganography techniques for image documents are not directly applicable to text documents.

Conventional methods for data hiding in text documents include dot encoding, space modulation (line shift coding, word shift coding), luminance modulation, halftone quantization, component manipulation and syntactic methods. However, these methods are not well adapted to present day situations whereby the medium of graphical representation of the text document may be flexible, and/or whereby the decoding is performed on an image that significantly deviates from the original graphical representation as intended.

In relation to flexible graphical representation, the display area itself may relate to any type of screen, ranging from a small screen area on a smartphone screen to a huge full screen space on a large screen. Hence, one cannot rely on traditional text area dimensions when embedding data in text. Also, the font may be different from the font as intended, in view of device restrictions or user preferences of the device. Hence, a solution is sought that does not critically depend on text area dimensions or font properties, as these may be flexible.

In relation to the image on which decoding is performed, the image may be a transcoded and/or compressed and/or skewed and/or noisy and/or deformed version of the original graphical representation as intended. For instance, this may relate to an image taken from a screen or a screen area with the camera of a smartphone, whereby the position is tilted with respect to the screen, and/or aliasing may be present, and/or a lot of noise may be present.

The conventional methods do not provide a solution to the above problems. For example, dot encoding is not able to deal with said flexibility, and is not robust with respect to noise present in the image on which decoding is performed.

WO2009116953A2 and US8125691B2 disclose related methods and systems but require overly complex decoding and/or lack flexibility with respect to the graphical representation of the text string and/or lack robust decoding when the image to be decoded is deformed and/or contains noise.

The present invention aims at addressing issues such as the issues mentioned above.

### Summary of the invention

According to a first aspect, the present invention provides a method for embedding a variable sequence, preferably a bit sequence, comprising:
- providing the variable sequence and a text string comprising words;
- identifying, among the words comprised in the text string, carrier strings suitable for embedding;
- generating formatting data associated with said text string, said formatting data comprising instructions for embedding, within the respective identified carrier strings, respective variables, preferably bits, of the variable sequence;

wherein the identifying of carrier strings comprises identifying, for each carrier string, one or more carrier words, preferably adjacent carrier words, such that the carrier string comprises at least two spaces, the spaces being letter spaces or word spaces;
wherein the embedding of a respective variable relates to altering each of the letter spaces and/or each of the word spaces of the respective carrier string so that the sum of altered spaces if the value of the variable equals a first value is distinguishable from the sum of altered spaces if the value of the variable equals a second value, preferably so that the sum of altered spaces if the value of the bit is zero is distinguishable from the sum of altered spaces if the value of the bit is one.

Thereby, the "being distinguishable" may relate to any detectability, without being limited to detection by a machine or by a human. In fact, "being distinguishable" merely relates to minimal requirements relating to graphical representation, which may relate, e.g., to assuming some *minimally distinguishable unit.* In example embodiments with graphical representation involving pixels, the minimally distinguishable unit may relate to "0.5px" or "1 px" or "1.1 px" or "1.2px" or "1.3px" or "1.4px" or "1.5px" or "1.6px" or "1.7px" or "1.8px" or "1.9px" or "2px" or "2.1 px" or "2.2px", or larger values, such as "2.5px" or "3px" or "3.5px" or "4px" or "4.5px" or "5px". In example embodiments with graphical representation involving physical dimensions, the minimally distinguishable unit may relate to "0.1 mm" or "0.2mm" or "0.3mm" or "0.4mm" or "0.5mm" or "0.6mm" or "0.7mm" or "0.8mm" or "0.9mm" or "1 mm" or "1.1 mm" or "1.2mm", or larger values, such as "1.5mm" or "2mm" or "2.5mm" or "3mm" or "4mm" or "5mm" or "6mm". In example embodiments with generic graphical representation (or, equivalently, unknown graphical representation), the minimally distinguishable unit may be expressed in function of a character width, e.g., "0.05em" or "0.05rem" or " 0.1 em" or "0.1rem" or "0.2em" or "0.2rem" or "0.3em" or "0.3rem" or "0.4em" or "0.4rem" or "0.5em" or "0.5rem" or "0.6em" or "0.6rem". In embodiments, the method comprises the further step of receiving, from a user, a value for the minimally distinguishable unit.

In embodiments, the altering of each of the letter spaces and/or each of the word spaces relates to a same pre-determined first delta if the value of the variable is a first value and a same pre-determined second delta if the value of the variable is a second value. In embodiments with a known minimally distinguishable unit, the first delta and the second delta may be chosen in function thereof. This may relate, e.g., to ensuring that, while altering spacing of carrier strings, the sum of altered spaces if the bit is zero differs from the sum of altered spaces if the bit is one by at least the minimally distinguishable unit. In embodiments with a known minimally distinguishable unit, moreover, each of the first and second delta and the number of words for a considered carrier string may be chosen in function of the minimally distinguishable unit. This may relate to determining, for a current carrier string and based on a value of the first and second delta and the minimally distinguishable unit, whether the next word of the text string should be added to the current carrier string or to the next carrier string.

In embodiments, the altering of each of the letter spaces and/or each of the word spaces relates to a first set of different delta-values if the value of the variable is a first value and a second set of different delta-values if the value of the variable is a second value. This may relate, e.g., to certain font setting and/or text rendering according to proportional spacing and proportional scaling of spaces dependent on which characters surround the space. This may also relate to treating the spaces between characters of a ligature differently from the spaces between other the characters. Such use of uneven spacing and/or uneven altering of spacing may furthermore relate to aesthetic and/or functional considerations in relation to the optimal displaying of text and/or optimal readabillity for readers with a visual impairment and/or optimal "hiding" of the embedded text string so that the embedding goes unnoticed.

In embodiments, spaces of the carrier string are altered only if the value of the bit is zero, and not if the value of the bit is one. In embodiments, spaces of the carrier string are altered only if the value of the bit is one, and not if the value of the bit is zero.

In embodiments, only letter spaces, i.e., inter-character spaces within words, are altered, and word spaces, i.e., the spaces between words, are not altered.

In embodiments wherein the variable is a three-valued variable, or an n-valued variable, each of the three values, or n values, may be associated with a respective different delta. In preferred embodiments, the variable sequence is a bit sequence, and each variable is a bit, whereby the embedding of a respective bit relates to altering each of the inter-character spaces of the respective carrier string with a same pre-determined first delta if the value of the bit is zero and a same pre-determined second delta if the value of the bit is one. In this document, it is assumed that the variable is such a binary variable, or, equivalently, bit, without limiting the invention thereto.

In preferred embodiments, at least one of the first delta and the second delta is an increment, wherein the other one may be zero or may be a decrement.

In embodiments, at least one of the first delta and the second delta is a decrement, wherein the other one may be a zero or may be an increment.

In embodiments, each of the first and second delta are increments. In alternative embodiments, each of the first and second delta are decrements.

In embodiments where both letter spaces and word spaces are altered, the letter spaces may be associated with a first and second *letter-space-related* delta, whereas the word spaces may be associated with a first and second *word-space-related* delta, which may or may not be different from the first and second letter-space-related delta.

Such a method may advantageously enable a solution to, e.g., the problem of flexibility of graphical representation and/or the problem of robust decoding in noisy environments.

In relation to flexible graphical representation, the invention enables a display area for the graphical representation to relate to any type of screen or printed medium, ranging from a small screen area on a smartphone screen to a huge full screen space on a large screen. The invention thereby enables embodiments with embedding based only on letter distance, so that the automatic line breaks that may occur as part of the graphical representation process do not impact the embedding. For such embodiments, likewise, line breaks and paragraph ends have no impact. Hence, the invention enables data embedding in a broad range of applications, including those where one cannot rely on traditional text area dimensions.

In relation to robust decoding, the invention enables high resilience in relation to noise, by relying, mainly or exclusively, on carrier strings having two spaces or more. By selectively relying on these substrings of the text string, robustness is enabled, as these carrier strings contain at least two spaces which may be both altered, whereby the total word length of these words is altered by the "accumulation" or sum of altered spaces. This advantageously allows to reduce the alteration of space to a minimum. In embodiments with a first and second delta, this may allow to reduce the delta value, or the difference between the first and the second delta, to a very low value, e.g., in a pixel-related context, to a value close to a few pixels. Surprisingly, the inventors have found that a very small difference, or one delta being (only) a few pixels and the other delta being zero, enables sufficiently robust decoding in case the minimal number of spaces of the carrier string is two, e.g., in the case of single carrier words containing at least three characters. Moreover, the inventors have found that the same very small difference enables even more robust decoding in case of a minimum of three spaces in the carrier string, e.g., with the minimal length of single carrier words being four characters. Overall, it appears that even in embodiments without use of word spaces, relying only on letter spaces, the minimal length of carrier words may be three or four or five but need not be longer, since a sum of increments of three, four or five for the word length should be sufficient for robust decoding even in case the image to be decoded is very tilted and/or very noisy. Similarly, for embodiments where only word spaces are altered, as little as two, three or four word spaces suffice for robust decoding. In other embodiments, both letter spaces and word spaces are altered, leading to even lower requirements on the carrier string. Such an advantage is not provided by, e.g., by WO2009116953A2 and US8125691B2, which do not provide for such "accumulation", and hence do not provide for robust decoding in case the image to be decoded is too tilted and/or too noisy.

In relation to robust decoding, furthermore, it is noted that the invention may allow the input image (graphical representation) to be a transcoded and/or compressed and/or skewed and/or noisy and/or deformed version of the original graphical representation as intended. For instance, this may relate to an image taken from a screen or a screen area with the camera of a smartphone, whereby the position is tilted with respect to the screen, and/or aliasing may be present, and/or a lot of noise may be present. Thereby, the altering of spaces according to the invention may provide a robust means for handling such challenges, relating to an imperfect display of the graphical representation.

In embodiments, the step of identifying carrier strings, on the one hand, and the step of generating formatting data, on the other hand, are carried out independently of each other. In related embodiments, the steps are carried out in parallel, i.e., they are carried out in periods that are at least partially overlapping in time. In embodiments, the generating of formatting data is carried out entirely after or entirely before the identifying of carrier strings. This may, e.g., relate to embodiments wherein carrier string identifiation amounts to carrier word identification which is available separately and the formatting data is expressed relatively to the carrier word identification by means of labels providing unique id's for carrier words, such as "w00", "w01", etc. This may have the advantage of modularity and/or flexibility and/or speed-up, allowing to implement and carry out the method steps independently and/or in parallel.

In embodiments, the step of identifying carrier strings, on the one hand, and the step of generating formatting data, on the other hand, are carried out at least partially in a pre-determined sequence, wherein the second step is carried out based on at least part of the output of the first step. In example embodiments the identifying of carrier words is carried out at least partially first, and the generating of formatting data is performed at least partially subsequently, wherein some additional criterion is met. In examples, this may involve determining the bit sequence from an input bit sequence, wherein padding bits are added for controlling the relative share of zeros and ones in the bit sequence in such a way that, for carrier words of the eventual encoded text string, the number of altered inter-character spaces closely matches the number of non-altered inter-character spaces. Such a form of encoding is possible by taking into account the exact lengths of each of the carrier words and requires that the step of identifying carrier words is carried out at least partially before the generating of bit sequence from the input and string, for eventually generating the formatting data. In example embodiments the generating of formatting data is carried out at least partially first, and the identifying of carrier words is performed at least partially subsequently. This may relate, for instance, to embedding a 32-bit sequence and encoding the 32 bits only in the subset carrier words with longest length, thereby establishing a certain minimal length for words belonging to the subset, as this may further enhance robustness of encoding.

According to a second aspect, the invention provides a method for decoding an encoded text string, comprising:
- receiving a graphical representation of the encoded text string comprising the text string with the bit sequence embedded therein,
- receiving the words of the text string, preferably by detecting the words of the text string in the encoded text string by means of optical character recognition, OCR and based on the graphical representation;
- detecting lengths of carrier strings, preferably of carrier words, present in the graphical representation;
- assigning, based on the detected carrier string lengths and the words of the text string, respective detected carrier string lengths to respective words of the text string, preferably detected carrier word lengths to respective carrier words;
- determining, based on the respective carrier string of the text string and their detected carrier string lengths, the respective bits of the embedded bit sequence.

The decoding method thereby advantageously capitalizes on detecting only carrier string lengths, e.g., word lengths, which may be robustly done, rather than detecting individual characters. The carrier string length detection may thereby rely on any algorithm suitable for determining bounding boxes and need not be capable of distinguishing individual characters. In this sense, the algorithm need not be capable of optical character recognition. Thereby, the decoding method does not require determining the heights of the bounding boxes either, and may suffice with determining the bounding boxes lengths along with some detection of position, enabling to determine the sequence (left to right, line by line) of the bounding boxes. This leads to simple and robust decoding.

In embodiments, both the letter spaces and word spaces present in the text string are altered. Thereby, in some embodiments of the decoder/decoding, only letter spaces are considered and word spaces are ignored, which may have the advantage of a simple decoder (or simple decoding), with line breaks not having any effect on the decoding. In other embodiments of the decoder/decoding, both the letter spaces and the word spaces are considered, whereby the decoder/decoding takes into account line breaks, leading to accurate decoding.

To facilitate decoding, in preferred embodiments, a graphical representation of the text string *without* altered spaces (i.e., without embedding) is generated and is used as a reference representation. This reference representation is then used for comparison with the graphical respresentation *with* altered spaces (i.e., with embedding), allowing for clear distinction between carrier strings that are associated with a value of zero, on the one hand, and carrier strings associated with a value of one, on the other hand.

In embodiments of the decoder/decoding, only letter spaces are considered and word spaces are ignored. This leads to a simple decoder (or simple decoding). Thereby, the invention advantageously allows to apply such decoder/decoding to more than one type of embedding. Particularly, for embedding based at least on letter spaces, the decoder/decoding may function without knowing whether the embedding makes use of the word spaces as well. This leads to flexibility with regard to pairing of encoding and decoding.

In embodiments of the decoder/decoding, only word spaces are considered and letter spaces are ignored. This leads to a simple decoder (or simple decoding). Thereby, the invention advantageously allows to apply such decoder/decoding to more than one type of embedding. Particularly, for embedding based at least on word spaces, the decoder/decoding may function without knowing whether the embedding makes use of the letter spaces as well. This leads to flexibility with regard to pairing of encoding and decoding.

According to a further aspect, the invention provides an encoder system, comprising:
- a carrier string identification means;
- a formatting means;
- **preferably,** a graphical representation means;

wherein the carrier word identification means is configured for:
   - receiving a text string comprising words;
   - identifying, among the words comprised in the text string, carrier words suitable for embedding such that the carrier strings comprise at least two spaces being letter spaces or word spaces;
   - generating, based on said identification, carrier word identification data;
wherein the formatting means is configured for:
   - receiving the text string;
   - receiving a bit sequence;
   - receiving the carrier string identification data;
   - generating formatting data associated with said text string, said formatting data comprising instructions for embedding, within the respective identified carrier strings, respective bits of the bit sequence, said embedding of a respective bit relating to altering each of the letter spaces and/or each of the word spaces of the respective carrier string so that the sum of altered spaces if the value of the bit is zero is distinguishable from the sum of altered spaces if the value of the bit is one, **preferably** with a same pre-determined first delta if the value of the bit is zero and a same pre-determined second delta if the value of the bit is one;
wherein **preferably** the graphical representation means is configured for:
   - receiving the text string;
   - receiving the formatting data;
   - generating, based on the text string and the formatting data, a graphical representation of the text string with the bit sequence embedded therein, for display on a screen and/or for printing.

According to a further aspect, the invention provides a decoder system, configured for carrying out a method for decoding an encoded text string according to the invention.

According to a further aspect, the invention offers a digital data file representing a text document with embedded data, the file comprising a text string, and formatting data comprising instructions for altering each of the spaces of carrier strings comprised in the text string for said embedding of data, wherein each word of the carrier strings comprises at least two spaces, and wherein at least one substring of the text string does not have the same altered letter spaces and/or not the same altered word spaces.

According to a further aspect, the invention provides a computer program product comprising instructions which, when executed on a processor, cause the processor to execute a method for embedding a bit sequence and/or a method for decoding an encoded text string according to the invention.

Preferred embodiments and their advantages are provided in the description and the dependent claims.

### Brief description of the drawings

The present invention will be discussed in more detail below, with reference to the attached drawings.
**Figure 1A-1C** show examples of embedding of the same text string of different bit sequences of length 16 bit (codes), leading to graphical representations, wherein the minimum length of carrier words is four characters. For Figure 1A, this relates to embedding of the code 0000 0000 0000 0000. For Figure 1B, this relates to embedding of the code 0011 0010 1100 1011. For Figure 1C, this relates to embedding of the code 1111 1111 1111 1111.
**Figure 2A-2C** show three examples of embedding of the same text string with different input bit sequences of length sixteen bit, which are converted to bit sequences of length thirty-two bit before embedding, leading to the three graphical representations as shown.
**Figure 3A-3C** show three examples of vertical-word-shift-based embedding of the same text string of different input bit sequences of length 16 bit (codes), leading to graphical representations wherein all words may be subject to the vertical word shift. For Figure 3A, this relates to embedding of the input bit sequence 0000 0000 0000 0000. For Figure 3B, this relates to embedding of the input bit sequence 0011 0010 1100 1011. For Figure 3C, this relates to embedding of the input bit sequence 1111 1111 1111 1111.
**Figure 4A-4C** show three examples of vertical-word-shift-based embedding of the same text string with different input bit sequences of length sixteen bit, which are converted to bit sequences of length thirty-two bit before embedding, leading to the three graphical representations as shown.
**Figure 5** shows Levenshtein distance graphs for an example reference text versus its decoded version as decoded with OCR.
**Figure 6** illustrates formatting-related features of an example graphical representation of a text string, including letter spaces S1 and word spaces S2.

### Description of embodiments

The following descriptions depict only example embodiments and are not considered limiting in scope. Any reference herein to the disclosure is not intended to restrict or limit the disclosure to exact features of any one or more of the exemplary embodiments disclosed in the present specification.

Furthermore, the terms first, second, third and the like in the description and in the claims are used for distinguishing between similar elements and not necessarily for describing a sequential or chronological order. The terms are interchangeable under appropriate circumstances and the embodiments of the invention can operate in other sequences than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

In this document, the term "spaces" is an umbrella term for two mutually exclusive categories: "word spaces" or "inter-word spaces", on the one hand, and "letter spaces" or "inter-character spaces", on the other hand. Word spaces relate to the space (or, equivalently, spacing) between words commonly associated with the space bar on a keyboard; such spaces belong to one of the two categories of spaces that may be altered by the invention. Letter spaces relate to the space (or, equivalently, spacing) between characters belonging to the same word. These spaces belong to the other category of spaces that may be altered by the invention. The term "letter" is thereby non limiting, and may relate to any character, e.g., any ascii or unicode character or other "typographical unit". Likewise, the term "word" is not limited to words of a natural language and may relate to any string of characters. In embodiments, a word is thereby defined as a word-space-free substring of the text string, whereby subsequent words are terminated and initiated by the occurrence of word spaces, or, in embodiments with line breaks, by the occurrence of word spaces and line breaks.

In this document, the term "px" refers to pixel as unit for measurement, whereby, e.g., a pixel (px) at 96 DPI (dots per inch) may be equal to 0.2645835 millimeters, or 0.75 points. The term "pt" refers to points as unit for measurement, whereby, e.g., a point may be equal to 0.352778 millimeters, or 1.333 pixels.

In this document, the term "formatting data" relates to "formatting data for displaying and/or printing". The formatting data may thereby relate to any set of machine-readable instructions for specifying the graphical representation of the text string, or, related, for modifying the graphical representation of the text string with respect to a default graphical representation of the text string. With reference to Example 6, this may, e.g., relate to the altering of the letter space S1. However, it may additionally relate to altering any or any combination of the word space S2, the word space offset W1, the width W0 of the typographical unit "space", any of the heights H1-H3, a shape or dimension of a character or a shape or dimension or color or contrast or appearance of a feature 7a-7f' of the character, such as serif or a stem or a stroke or a descender or an ascender or an aperture. Hereby, the graphical representation may relate to any of a graphical user interface and/or printing and/or a printing instruction and/or any data format relating to graphical representation and/or printing. The graphical user interface may relate to a screen or screen area of a laptop device or desktop device or mobile device or smartphone or tablet or e-reader or related device, yet may equally relate to any other screen, regardless of whether the interface relates to a color display or a greyscale display or a monochrome display. In fact, the graphical user interface may even relate to a command-line interface (as opposed to an interface providing more than only a command line as interface), whereby the interface is characterized in that it thereby supports some form of processing of the formatting data according to the invention. In example embodiments, the graphical user interface relates to a purely command-line interface comparable to an MS DOS 1.X or 2.X shell or unix shell as known to the skilled person, with the only difference that the spaces are formattable, allowing to give expression to the formatting data generated according to the invention. Letter spaces and/or word spaces being formattable may thereby relate to any formatting means, including any means based on hardware, based on software, or based on a combination of hardware and software. In example embodiments, the formatting means may relate to middleware and/or a script, configured for receiving the text string and the bit sequence, and for generating, based upon the text string and the bit sequence, the formatting data. In related example embodiments, the formatting means relates to middleware and/or a script, configured for receiving the text string, the bit sequence, as well as carrier word identification data. In such cases, the formatting means need not identify the carrier strings within the text and is responsible merely for the actual formatting data generation, i.e., the generating, based upon the text string, the bit sequence and the carrier string identification data, of the formatting data. In example embodiments, the manipulation means may be a hardware component. For instance, the manipulation means may relate to a screen overlay capable of selectively bending light to manipulate letter spaces and/or word spaces as viewed by a user looking through the screen overlay. In other examples, the manipulation means may be comprised in a virtual and/or physical printing device, capable of receiving and altering printing instructions in view of formatting data.

In this document, formattting data being expressed in pixels does not limit the graphical representation according to the invention in any way. Particularly, formatting data being expressed in pixels does not imply that the formatting data is intended for display on a screen only. Rather, formatting data expressed in pixels may relate to any pixel-mediated convention for specifying formatting, i.e., any way of denoting formatting instructions that is machine-readable. In example embodiments, formatting data expressed in pixels relates to the graphical representation of the text string according to the generated formatting data on a computer screen or in a physical printer device. In example embodiments, formatting data being expressed in pixels relates to use of the CSS (cascading style sheet) command "letter-spacing" for manipulating the letter spacing. Thereby, the "letter-spacing" command may in embodiments also alter the word space. Particularly, in preferred embodiments, the "space character" (or "space bar character") is considered as a typographical unit (identifiable with, e.g., ascii code 32, or unicode U+0020), and the word space S2 is the sum of the width of this typographical unit, denoted W0, and both (virtual) "letter spaces" surrounding it. This amounts to S2 = W0 + 2*S1. In view hereof, in embodiments, any "letter-spacing" command altering the letter spacing S1 with an amount x may concurrently alter the word spacing S2 with an amount 2*x. In other embodiments, the word space is the sum of a word space offset and the letter space. In example embodiments, formatting data expressed in pixels relates to storage of the text string and the formatting data, either separately or in an integrated fashion, in a digital mark-up language or format allowing expressing inter-character distance in pixels, such as one of the well-known word processing formats (e.g., Microsoft^{®} Word, Open Office, LaTeX, etc) or printing-oriented formats (e.g., Adobe^{®} portable document format, PostScript, etc) or internet-oriented formats (e.g., HTML, XHTML, etc).

In preferred embodiments, the formatting data is expressed relative to a default graphical representation of the text string, and only contains instructions for those portions of text, e.g., carrier strings or carrier words, for which the graphical representation deviates from the default formatting. This may advantageously lead to compact and easy instructions. In other embodiments, the data formatting does not assume a default graphical representation of the text string, and also comprises instructions for other text portions not deviating from the default formatting, or even comprises instructions for the entire text string.

In preferred embodiments, the formatting data is expressed relative to text portion identification data, such as carrier string identification data. In example embodiments, this relates to text portion identification data (e.g., carrier string identification data) for identifying subsequent portions of the text string (e.g., words, or carrier strings (spanning one or more words), or carrier words). Such embodiments enable numbering of the text portions in ascending order, enabling to express the formatting data in correspondence with this numbering, with one instruction per text portion (the subsequent text portions being, e.g., carrier strings and/or carrier words and/or words). In such embodiments, there is no need to include any reference to actual portions of the text string in the formatting data, as any reference may be indirect, via the text portion identification data. This may advantageously enable compact and simple formatting data. In other examples, the text portion identification data is partially or entirely comprised in the formatting data, enabling "absolute" expression of the formatting with respect to the text string, without mediation of any further data.

In embodiments, the steps of determining and embedding are repeated until all words (or all characters) deemed suitable are used. This may advantageously be combined with embodiments wherein the bit sequence is calculated based on input data according to an error correction scheme. This may lead to efficient use of the available suitable words for providing error correction. In other embodiments, this may relate to mere repetition of the bit sequence until all words deemed suitable are used. This may lead to effective use of the available suitable words for providing error correction that is easy to decode.

In embodiments, the method further comprises:
- receiving an input bit sequence;
- calculating, based on the input bit sequence, said bit sequence;
wherein the bit sequence calculation comprises adding extra bits to the input bit sequence, the extra bits relating to parity bits for error correction.
In example embodiments, the error correction may thereby relate to generating a Hamming code. Thereby, the bit sequence is calculated from the input bit sequence, wherein the bit sequence may comprise both the input bit sequence and parity bits. In one example, four bits of an input bit sequence are coded to a bit sequence of seven bits, according to the Hamming(7,4) linear error-correcting code. In other examples, the bit sequence is calculated from the input bit sequence according to any or any combination of Hamming code, Reed-Solomon error correction, turbo code. Such error correction may advantageously provide for more robustness in the decoding, where a bit error in the decoding may be automatically corrected.

In embodiments, the method further comprises:
- receiving an input bit sequence;
- calculating, based on the input bit sequence, said bit sequence;
wherein the bit sequence calculation comprises adding extra bits to the input bit sequence, the extra bits relating to padding bits for controlling the relative share of zeros and ones in the bit sequence.

The controlling of the relative share of zeros and ones may be advantageous for ensuring more predictability for the graphical representation of the encoded text string. Particularly, by having the relative share of zeros and ones in the bit sequence equal, the total length of the encoded text string, i.e., the graphical representation of the text string according to the formatting data, may be close to some predictable average length, yet may still deviate from this length, because some carrier strings (e.g., carrier words) are longer than other carrier strings (e.g., carrier words). In other words, by adding padding bits, the total length of the encoded text string may have reduced sensitivity with respect to a variation of values of the input bit sequence, or, related, with respect to a variation of the word lengths of subsequent carrier strings (e.g., subsequent words) present in the text. In preferred embodiments, the padding bits are introduced according to a static scheme, wherein each bit of the bit sequence is replaced by a pair of a zero bit and a one bit. Thereby, "1" may map on the pair "1 0" and "0" may map on the pair "0 1", or, in variant embodiments, vice versa. Such static schemes may still exhibit some deviation on the actual length of the encoded text string, but nevertheless yield good results in practical set-ups. In alternative embodiments, the padding bits are introduced according to a dynamic scheme, wherein each bit of the bit sequence is replaced by one or more bits, e.g., a pair of bits, so that a desired intended length of the encoded text string is reached iteratively, which may allow for closer approaching of the desired encoded text string length, but entails more complexity for the decoding. Regardless of the way the padding bits are introduced, the technical effect may be that the encoded text string may conveniently fit in some given screen area, regardless of the interplay between the patterns present in the input bit sequence and the word lengths of the words present in the text string. This may advantageously facilitate the correct graphical representation of the encoded text string.

Additionally, the controlling of the relative share of zeros and ones, e.g., by encoding according to said static scheme, may be advantageous for ensuring that the bit sequence is populated with sufficient "examples" of both carrier strings without altered inter-character spacing and carrier words with altered inter-character spacing. This may be advantageous particularly in the decoding, as the image used for decoding may be resized and deformed, in which case "examples" of both carrier words with and without altered inter-character spacing are needed to compensate for the resizing.

In embodiments, the identifying of carrier strings comprises identifying, for each carrier string, one or more carrier words such that the carrier string comprises at least two letter spaces; wherein said altering of the spaces for the embedding of the respective bit relates to altering each of the letter spaces present in the carrier string. Working with letter spaces may have the advantage that these are "by default" not impacted by line breaks, leading to more robust decoding.

In embodiments, each carrier string is a sequence of one or more carrier words, wherein the carrier string is identified as comprising at least two letter spaces in total and only letter spaces are altered. This enables an embedding wherein the text string is divided in carrier strings by going over the text string word by word, starting a new carrier string whenever the current carrier string is found to have a number of letter spaces that is at least a pre-determined number, e.g., 2 or 3 or 4 or 5. Carrier strings are then sequences of one or more words, and all words belong to a carrier string (as words with length one can trivially be included in the carrier string of the word following or preceding such a word). In such embodiments, line breaks do not impact the decoding, as the splitting of carrier strings across lines does not cause a loss of information with respect to any of the letter spaces, leading to robust decoding.

In embodiments, the identifying of carrier words is such that the carrier string comprises at least two spaces including at least one word space; wherein the altering of the spaces for the embedding of the respective bit relates to altering each of the spaces including the at least one word space. In such embodiments, each carrier string may be a sequence of one or more carrier words, wherein the carrier string is identified as comprising at least two spaces in total, wherein both letter spaces and word spaces are counted, and both are altered according to the invention. This enables an embedding wherein the text string is divided in carrier strings by going over the text string word by word, starting a new carrier string whenever the current carrier string is found to have a total number of spaces (letter spaces plus word spaces) that is at least a pre-determined number, e.g., 2 or 3 or 4 or 5. Carrier strings are then sequences of one or more words, and all words may belong to a carrier string (as words with length one can trivially be included in the carrier string of the word following or preceding such a word). In such embodiments, line breaks may impact the decoding, as the splitting of carrier strings across lines may cause a loss of information with respect to one of the word spaces. This may be compensated for in many ways, e.g., by preventing breaks between these words (e.g., with so-called non-breaking spaces) and/or by adding parity bits and/or by adding padding bits, leading to robust decoding.

In embodiments, all carrier strings are single carrier words. This may have the advantage of both simple encoding and also simplified decoding, as the detection of word lengths (e.g., via bounding boxes around single words) is sufficient to allow robust decoding.

In embodiments, the method further comprises:
- receiving an input bit sequence;
- calculating, based on the input bit sequence, said bit sequence;
wherein the bit sequence calculation comprises adding extra bits to the input bit sequence, the extra bits relating to parity bits for error correction and to padding bits for controlling the relative share of zeros and ones in the bit sequence. Such embodiments may enable the advantages of error correction combined with the advantages of controlling the relative share of zeros and ones in the bit sequence.

In embodiments, the method further comprises: generating, based on the text string and the formatting data, a graphical representation of an encoded text string, for display on a screen and/or for printing, the encoded text string comprising the text string with the bit sequence embedded therein.

In embodiments, the formatting data is expressed in pixels, and wherein the first delta and the second delta relate to a first number of pixels and a second number of pixels, wherein preferably one of the pre-determined first and second number of pixels is zero.

In embodiments, a difference between the pre-determined first and second number of pixels is one. Preferably, one of the first and second number of pixels is zero and the other one of the first and second number of pixels is one. In one example, the first number is zero and the second number is one. In another example, the first number is one and the second number is zero.

In embodiments, the identifying of carrier strings further comprises generating carrier string identification data; wherein said embedding of respective bits of the bit sequence is performed for said bit sequence and for a second bit sequence based on the same carrier string identification data. This may advantageously enable more efficient and more compact definition and calculation of the formatting data. As the carrier string identification is required only once, less calculation resources are used. Moreover, as the carrier string identification is available separately, the formatting data may be expressed relatively thereto, leading to shorter and less complex formatting data.

In embodiments, the determining whether the word is suitable further relates to determining whether the word does not contain hyphens. This may have the advantage that any process, e.g., software, involved in the converting of the text string and the formatting data into a graphical representation, e.g., a pixel-based or vector-based representation, may apply automatic hyphenation and/or automatic line breaks to words without interfering with the embedding according to the invention, as many software tools commonly do with words containing hyphens. In related embodiments, the determining whether the word does not contain hyphens may advantageously be replaced or combined with an approach wherein hyphens are considered equivalent to spaces, whereby the two or more parts of the word are considered as separate words for the algorithm.

In embodiments, the determining whether a carrier string, possibly a single word, is suitable further relates to determining whether the carrier string does not exceed a pre-determined maximum dimension, the pre-determined maximum dimension preferably relating to a medium for graphical representation of the text string with the bit sequence embedded therein. This may relate, e.g., to a maximum line width. This may have the advantage that the dimensions (e.g., number of pixels, inch or cm, ....) of the medium through which the text string, in view of the formatting data, is represented does not interfere with the embedding according to the invention. For instance, a narrow (physical) screen or a narrow (virtual) screen area on a screen may cause a word to not be representable on a single line. This may cause the word to be broken up over two or more lines, which leads to challenges for decoding of the embedding according to the invention. By not involving these longer words in the embedding, such problems may be prevented. In related embodiments, the determining whether the carrier string or word does not exceed a maximum dimension may advantageously be replaced or combined with an approach wherein such carrier strings are broken in parts according to a pre-determined breaking convention (e.g., each part having the maximum dimension), whereby the two or more parts of the carrier string are considered as separate strings/words for the algorithm. Thereby, an exception may be provided for embodiments where words containing hyphens are considered as two separate words, by not using these words for embedding and/or by adopting further conventions regarding processing of such words, since eventual representation of these words may depend on both the length of the entire word and the length of its parts.

In embodiments, the embedding according to the invention is performed word by word, rather than by considering entire text strings at once. This may be advantageous for various reasons. In examples, the text string is written word by word by a user, and the user receives real-time feedback in relation to the suitability for embedding of the text already written. This may relate, e.g., to indicating to the user certain parameters which evolve as the user adds words. These parameters may thereby relate to the total number of bits that can be embedded which increases as the user adds words, and/or the error correction that is enabled for a combination of a given text string and a given bit sequence length, and/or the predicted total length of the text string taking into account the formatting data.

In embodiments, the repeated identifying of carrier strings and embedding respective bits is subject to a stopping condition. The stopping condition may relate to any condition relating to the availability of remaining bits or of words deemed suitable, but also to the number of iterations with respect to the method steps. In embodiments, the method is carried out until all bits of the sequence of bits are embedded. In preferred embodiments, said steps are repeated for as many times as needed until all bits of the sequence of bits are embedded. In addition, the steps may be repeated to more when it is detected that more carrier words are still available. This may be advantageously combined with embodiments wherein the bit sequence, in such cases, is interpreted as input bit sequence, and furher bits are added, which may relate to error correction, for instance through mere repetition of the input bits and/or through the generation of parity bits. For instance, the input bit sequence may be repeated for as long as further carrier words are found available. This may further enhance robustness for the decoding, as not the entire text is needed to perform successful decoding, but only some starting portion, middle portion or ending portion.

In embodiments, the formatting data comprises cascading style sheet, CSS, code comprising a letter-spacing property for altering the inter-character space of one of the carrier words. This may relate to convenient implementations of the altering of inter-character space according to the invention.

In embodiments, the identifying of carrier strings further comprises generating carrier string identification data, which is then stored along with the text string in an integrated fashion. In example embodiments, the text string is stored in a text processing format allowing a form of markup, such as HTML or XML, or a form of text annotation, such as rich text format, wherein the carrier string identification data is carrier word identification data that is stored as markup or annotation, respectively. In example embodiments, the text string is stored in HTML and the carrier word identification data is stored by attributing, to each identified carrier word, a 'span' element with a unique label for the word stored as class. For example, unique labels may, e.g., be "w00", "w01", "w02", etc, and the carrier words "container" (first carrier word) and "vessel" (second carrier word) may be stored in the HTML source as "<span class='w00'>container</span>" and "<span class='w01'>vessel</span>". This contrasts with words that are not carrier words, which may remain without 'span' element in the HTML source. Such embodiments may advantageously combine with embodiments where the generation of formatting data involves CSS. Particularly, where the formatting data is formulated in CSS code, the letter-spacing property may be utilized to generate very basic formatting data, where only the carrier words for which inter-character space is altered are mentioned. Building on the earlier example with carrier words "container" and "vessel", consider an example where the first bit of the bit sequence is zero and requires no alteration, while the second bit is one and requires alteration. In such cases, the formatting data need not mention the first word (as no formatting change is required) and may simply refer to the second word with a style-related code portion "<style> .w01 { letter-spacing: 1 px; } </style>" for increasing the inter-character space of the second carrier word by one pixel. As clear from the example, such embodiments may embed different bit sequences starting from the same source document, only requiring changing the style-related code portion.

In embodiments relating to decoding, the detecting of the word lengths of the words present in the graphical representation is based on bounding box detection. This may be advantageous, since many tools for detecting bounding boxes are available, whereby reliability may exceed the reliability of actual optical character recognition, which is more involved than mere bounding box detection.

In embodiments, the assigning of respective detected word lengths to respective words of the text string is based on calculating Levenshtein distance. The inventors have found that such a distance measure is generically applicable and is adequate to resolve misalignment problems between the string of words and the list of word lengths.

In embodiments, the formatting data relates exclusively, or at least, to the altering of the letter space. In embodiments, the formatting data relates exclusively, or at least, to the altering of the word space. In embodiments, the formatting data relates to the altering of the letter space and the word space. In embodiments, the formatting data relates to any or any combination of the letter space, the word space, the word space offset, the X-height, the cap height, the leading, a shape or dimension of a character or a shape or dimension or color or contrast or appearance of a feature of the character, such as serif or a stem or a stroke or a descender or an ascender or an aperture.

In embodiments of the encoder system, at least the carrier string identification means and the formatting means are comprised in a same encoder device, the carrier string identification means and the formatting means preferably being provided integratedly. In related embodiments, the encoder device is thereby configured for:
- receiving the text string and the bit sequence;
- repeatedly determining, while considering a next word of the sequence, whether the next word is a carrier word, for identifying carrier strings suitable for embedding;
- whenever a carrier string is complete, embedding a respective next bit of the sequence of bits in the respective carrier string.

In embodiments of the encoder system, the carrier string identification means and the formatting means are comprised in separate devices. In embodiments relating thereto, the device of the carrier string identification means operates without knowledge of the bit sequence.

In embodiments of the decoder system, the determining of word length is performed via word length determination means comprised in a first device, and the actual assignment of the word lengths to words is performed by a second device different from the first device. This advantageously allows for example embodiments where the first device merely determines word lengths, e.g., by means of embedded features comprised in the first device and capable of detecting bounding boxes of any object (including words). In such example embodiments, the second device, which may be a remote device having the original text string at its disposition, then performs the actual assignment of word lengths to words, and the subsequent determining of the embedded bit sequence.

In embodiments of the decoder system, the system is comprised in a single device being the decoder device.

According to a further aspect, which is not intended to limit the invention in any way, the invention provides a method for embedding a bit sequence with respect to a graphical representation comprising a minimally distinguisable unit, comprising:
providing the bit sequence and a text string comprising words;
identifying, among the words comprised in the text string, carrier strings suitable for embedding;
generating formatting data associated with said text string, said formatting data comprising instructions for embedding, within the respective identified carrier strings, respective bits of the bit sequence;
wherein the identifying of carrier strings comprises identifying, for each carrier string, one or more carrier words, preferably adjacent carrier words, such that the carrier string comprises at least two spaces, the spaces being letter spaces or word spaces;
wherein the embedding of a respective bit relates to altering each of the letter spaces **and/or** each of the word spaces of the respective carrier string so that the sum of altered spaces if the value of the bit is zero is distinguishable, with respect to said minimally distinguishable unit, from the sum of altered spaces if the value of the bit is one.

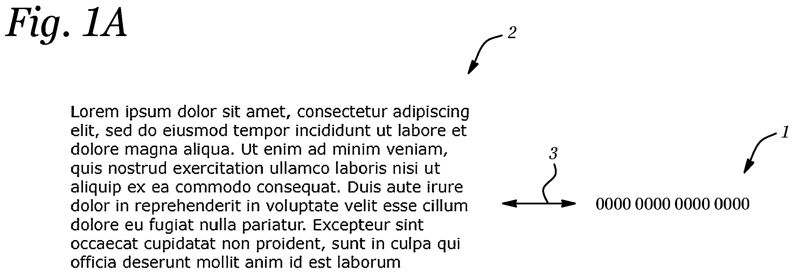

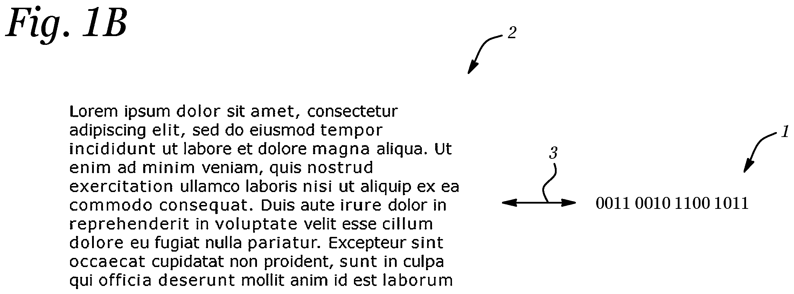

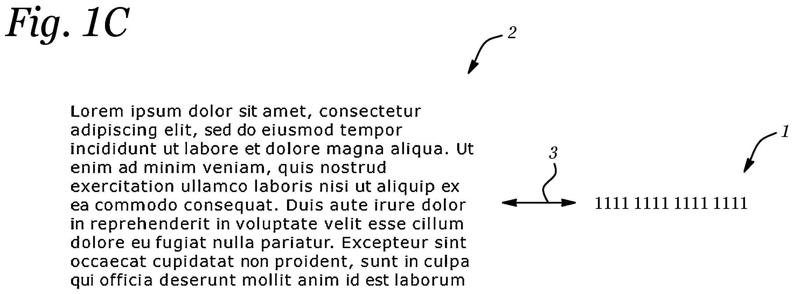

Example embodiments of the invention will be described with reference to Figs. 1-5 and are merely intended for illustrating aspects of the invention, without limiting the invention thereto.

### Example 1: example of encoding according to the invention

In each of the examples 1-5, only letter spaces are used for encoding, and the variable sequence is a bit sequence. Moreover, in each of the examples 1-5, the altering of each of the letter spaces (S1) relates to a same pre-determined first delta if the value of the bit is zero and a same pre-determined second delta if the value of the bit is one. In each of the examples 1-3, the carrier strings are identical to carrier words, as single words are used as carrier strings.

In each of the examples 1-5, the invention relates to text strings being questions of an exam that is presented to a group of exam participants via computer screens in a shared exam room, whereby the participants answer the questions via computer interaction. (In variants of the example, only the questions are displayed on the screen, and the answers are gathered through another medium, e.g., by writing on paper.) The graphical user interface is the same for all participants, with predetermined text areas for each of the questions. The only difference in graphical presentation is that, for each text string (question), the graphical representation of the text string comprises an embedded bit sequence that is unique for each participant and is embedded by means of the invention. The invention thereby advantageously provides a 'canary trap', i.e., a means for identifying who leaked information, e.g., when a participant takes a picture of his/her computer screen and shares the picture with other participants via messaging, social media or e-mail. When such an image is detected, it need not be a probem if the image is highly compressed and/or distorted and/or blurred, as the advantageous embedding (encoding) and decoding according to the invention may also enable succesful decoding in many of those cases.

Overall, when an online platform is used for taking tests, it is difficult if not impossible to prevent a participant from taking screenshots of the exam questions and share or publish them after the test. The invention enables to invisibly add information about the participant to the viewed webpage, so that the origin of a screenshot taken from that webpage can be traced.

The proposed example embodiment conceals the identity of the current user of the online platform by applying a dynamically generated stylesheet on the viewed web page, which slightly modifies the character spacing within each word in the exam question. Off the shelf OCR software can be used to detect the bounding box of each word in a taken screenshot, reconstruct the concealed digital info from the word sizes, and thus identify the authenticated user who took the screenshot. This type of text steganography can survive image rescaling and/or compression sufficiently well.

Reference is made to Figure 1A-1C, showing three examples of embedding 3 of the same text string of different bit sequences 1 of length sixteen bit (codes), leading to graphical representations 2, wherein the minimum length of carrier words is four characters. For Figure 1A, this relates to embedding of the code 0000 0000 0000 0000, leading to no altering of inter-character spaces. For Figure 1B, this relates to embedding of the code 0011 0010 1100 1011, leading to altering of the inter-character spaces of carrier words with sequence number corresponding to bit positions with bit value equal to one. For Figure 1C, this relates to embedding of the code 1111 1111 1111 1111, leading to altering of the inter-character spaces of each of the carrier words.

This example may thereby implement image steganography involving conceal information in digital content. Typical for prior art methods is that the code does not survive the different types of image compression which may be applied on a screenshot when saving or publishing online. The invention may thereby advantageously provide a better alternative, by keeping the info, concealed in an image, intact after changing image resolution or compression. Also, the info may be kept, concealed in a web page, intact after resizing the browser window, even if it causes the text to be reformatted (wrapped around). The invention may thereby provide an encoding algorithm which can be easily applied on different types of web pages, and which can dynamically generate a unique representation for each web page viewer. It may furthermore provide a robust decoding algorithm which reuses off the shelf software components and doesn't require heavy computation.

### Example 2: example of encoding and decoding according to the invention

This example is similar to Example 1, whereby more detail is provided regarding the decoding aspect of the invention.

Similar to Example 1, the embedding relates to concealing the digital data (unique user ID) by slightly changing the character spacing of different words within the displayed text. Readily available OCR software can analyse a screenshot taken from that text and measure the bounding box of each of the detected words. By comparing the detected word sizes or sizes of sequences of words with pre-generated reference data, the concealed info can be extracted.

For the decoding of the invention, it is thereby allowable that the image is compressed, as image compression algorithms typically try to maintain readability of a text. With the image (typically) being resized with regards to the original, in this example, a resizing factor may be calculated by comparing all word sizes in the reference data with all detected word sizes.

In variants of this example (not considered further), the decoding may be carried out without pre-generated reference data, and instead this reference data may be detected from the text detected by the OCR software. For such variants, preferably info about the used font is taken into account to work reliably, allowing to reconstruct the original text layout from the OCR data.

This example relates to a specific example implementation of the embedder (encoder) and decoder of the invention, according to following specifications:
1. A sample page html is generated, which sequentially assigns a specific Cascading Style Sheet (CSS) class to each word in a text (1 out of 16 classes or 1 out of 32 classes, details below)
2. A unique CSS fragment is generated in which - depending on a digital code - some of the CSS classes apply a slight visual change (details below)
3. The webpage is displayed in a browser control, a screenshot is taken and saved as .jpg
4. A third party OCR software is used to generate a .hocr metadata file from the jpg image (wherein hOCR relates to an open standard of data representation for formatted text obtained from optical character recognition)
5. The .hocr file is parsed to extract the necessary text coordinate data (details below), the extracted data is compared with reference data and based on the detected differences the concealed digital code is extracted.
The reference data used in this process is created by initially following the same steps described above for digital codes "0000000000000000" and "1111111111111111" and extracting reference metadata from the .hocr files.

For this example, tests are conducted with a web page containing a standard "lorem ipsum" text (69 words). The secret code embedded in the image is 16-bit (65536 possible values). This may be sufficient to uniquely identify each participant of a digital examination (wherein it is assumed that the screenshot to be analysed, and the context in which the screenshot was found, allows to find out which examination the screenshot was taken from).

It is noted that this example does not rely on individual character shift. Position shifts on individual characters in the text may not reliably be detectable by the OCR software. Below, instead, vertical word shift is considered. Interestingly, vertical word shift may be combined with embodiments of the invention. This may relate to using a slight vertical shift of full words instead of characters. This may be useful, as a bounding box of a full word may be more consistently detected. Overall, a vertical shift of 2 pixels enables reliable decoding. This may relate to the use of the CSS modifier "{position: relative; top: -2px;}", which may, in example variants, be combined with the altering of inter-character space within words according to the invention.

For relying on verical word shift, regardless of whether this is combined with altering of inter-character spacing, it may be advantageous to have a uniform distribution between encoded 0 and 1 values (if each bit is directly translated into a shift, there is no distinction possible between all 0's and all 1's). Therefore the 16-bit code may be converted to a 32-bit value, 1 represented by "01", 0 represented by "10". The resulting detection success in tests may thereby exceed 90% or even 99%, with only a few hundreds, or less, of the 65536 values having a 1-bit uncertainty. This type of small uncertainty can be solved by generating a sample screenshot encoded with each of both possible values, emphasizing the uncertain words in bold. A visual inspection can then easily decide which of both screenshots resembles the analyzed screenshot most.

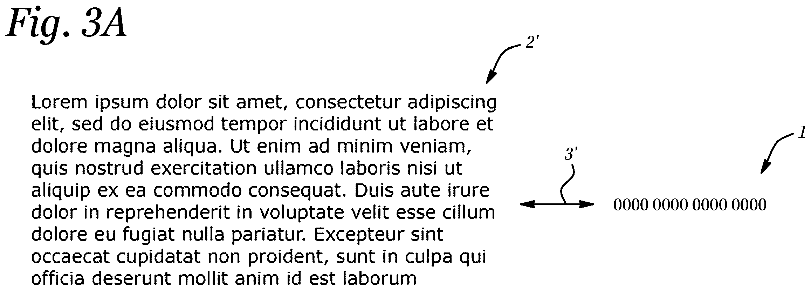

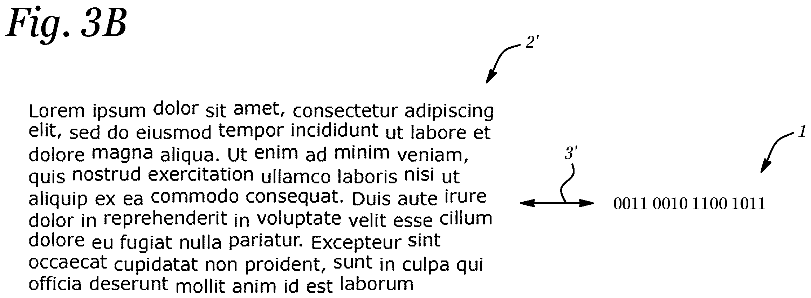

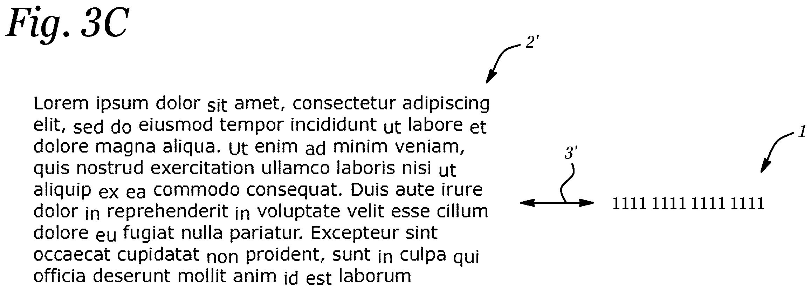

Reference is made to Figure 3A-3C, showing three examples of embedding 3' of the same text string of different input bit sequences 1 of length sixteen bit (codes), leading to graphical representations 2', wherein all words may be subject to the vertical word shift. For Figure 3A, this relates to embedding of the input bit sequence 0000 0000 0000 0000. For Figure 3B, this relates to embedding of the input bit sequence 0011 0010 1100 1011. For Figure 3C, this relates to embedding of the input bit sequence 1111 1111 1111 1111.

Additionally, this example considers the altering of inter-character spaces of carrier words. Therein, each of the inter-character spaces of the respective carrier word is altered with a same pre-determined first increment being zero pixels if the value of the bit is zero, and a same pre-determined second increment being one pixel if the value of the bit is one. For this adapting, the CSS modifier is "{letter-spacing: 1px;}". This modifier results in a word length (in pixels) which changes in function of the applied CSS. The advantage may be that a "horizontal" change is less noticeable than the vertical change demonstrated above. Also, since the letter-spacing change is accumulated over the full word, a minimally noticeable change still results in a clearly measurable word size change, except for very short words. Very short words may be excluded by using only carrier words, wherein carrier words must have at least three characters, or, in this example, at least four characters.

Like in the case of vertical word shift, an advantage may be that word bounding boxes are used, which are more reliably constructed than character bounding boxes.

Preferably, an "even distribution" of 0 and 1 is sought, by converting an input bit sequence into a longer (actual) bit sequence before encoding.

Another advantage may be that each word can be "decoded" separately, based on its own bounding box, while detecting vertical shift requires a combination of word bounding boxes relative to the bounding box of the containing line. The latter adds decoding complexity in a browser context, where words can be displayed on different lines depending on the screen size.

The altering of inter-character space yields graphical representations similar or equal to the ones of Example 1. Particularly, the graphical representations 2 of Fig. 1A-1C are also illustrations for the altering of inter-character space in this example (Example 2).

As for decoding, in this example, reliable decoding was obtained when using a font size of 14 points (using the classical definition of points, with 72.272 points in an inch). In variant examples, the font size is 10 or 11 or 12 or 13 or 15 or 16. Only words with four characters or more were used as carrier words.

The decoding was tested on a longer reference text (more than 200 words) to assess decoding accuracy also in circumstances where text matching may be challenging. Challenges may arise, e.g., where the image (a screenshot or a picture taken of the screen displaying the text string) contains only a part of the text string (used for encoding the user ID). Also, the image may contain more text than the reference text. Then, it may be challenging to extract those portions of text that are relevant text portions. Preferably, the decoder provides some abilities to search for the matching parts of reference text and decoded text, e.g., by means of calculation of Levenshtein distance.

For further illustration of the invention, an image of the longer reference text (more than 200 words) is considered and used as input for the decoder, wherein the reference text is presented in a left column, and the image also contains further text different from the reference text, in a right column.

In a first decoder step, the OCR software correctly detects the column structure, so the resulting text is structured correctly (not mingling text from both columns).

In a next step of the decoding, a first word list associated with the reference text is generated, along with a second word list associated with the detected text (omitting words that are not carrier words; in this example, omitting words shorter than four characters). For both lists, the sequence of words is preserved. This may be graphically illustrated by a list with one word per line, each word being a carrier word, wherein the line number corresponds to the sequence number of the carrier word. This list corresponds to carrier word identification, performed both on the reference text (input string) and the OCR-generated detected string.

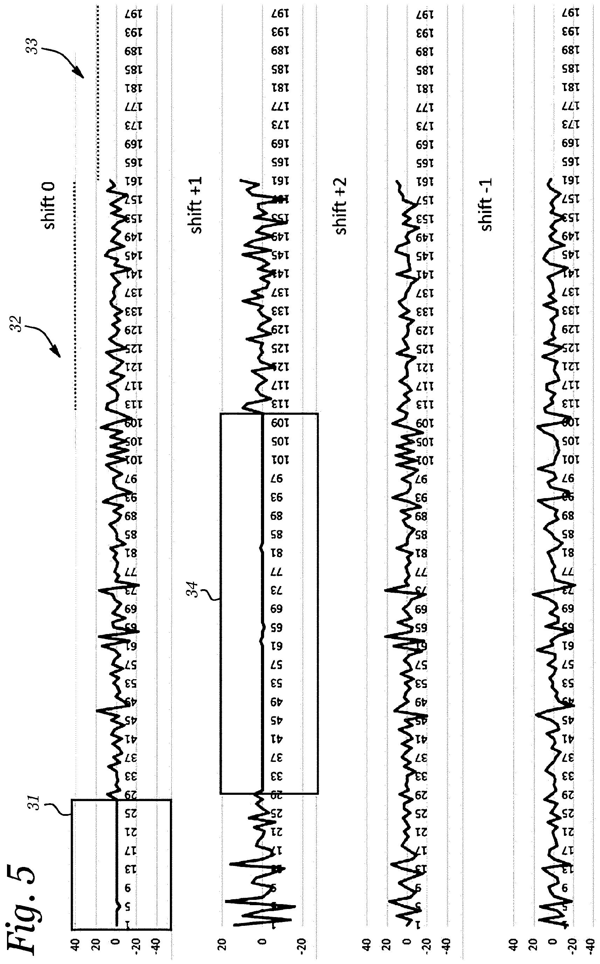

In a next decoder step, the first and second list are correlated, by calculating the Levenshtein distance of each word pair, subsequently then do the same with the reference list shifted a number of words forward or backward. This is illustrated by Figure 5.

Figure 5 shows Levenshtein distance graphs for the example reference text versus its decoded version as decoded with OCR, with shifts of (top to bottom) 0, +1, +2 and -1, with the x-axis representing the word index, and the y-axis representing the Levenshtein distance. (In variant examples, other shifts are considered, e.g., any shift of -2,-1,0,+1,+2 words, or any shift of -3, -2, - 1, 0, +1, +2, +3 words.) As illustrated by Figure 5, in a detection step, the reference text may be extracted from the decoded text, wherein correction may be provided for omitted/merged words in the detected text. In this example, a mismatch occurs that requires correction. The word is "LDL-receptor', and since the carrier word identification does not exclude words with hyphens, this word causes a mismatch. The mismatch may be prevented by not using words with hyphens as carrier words but may also be detected by means of the Levenshtein distance graphs.

Particularly, Fig. 5 shows a fist match 31 between the reference text and the detected text on the graph with offset 0, associated with Levenshtein distance 0. This match breaks up, owing to the word "LDL-detector". In view thereof, the match is no longer found on the graph with offset equal to zero ("offset 0"). Instead, a second match 34 is detected, on the graph with offset equal to one ("offset 1"). Furthermore, detected text 32 occurs which is not part of the reference text. Finally, also reference text 33 occurs which is not part of the detected text. This illustrates that distance graphs may be used to detect and correct mismatches between reference text and detected text.

Another aspect of this example relates to coping with resizing of the image on which decoding is performed. The image could be resized during saving or uploading, or a difference in screen resolution may result in size difference between reference and screenshot. In order to detect the resize factor required to match reference metadata with OCR metadata, it is advantageous to generate a longer bit sequence for actual encoding, based on the shorter input bit sequence. In this example, this boils down to moving away from "direct 16-bit encoding". Indeed, without rescaling it is possible to encode one of the bit values, e.g., 1, by altering inter-character distances, while not altering inter-character distances in the other case, with bit value, e.g., 0. However, when the image comprises rescaling, it is more difficult to distinguish between all 0's and all 1's, since a resize can also impact the inter-character distance. Therefore, in this example, the 16-bit input sequence (code) is converted to a 32-bit code, by adding padding bits. This is done with 1 represented by "01", and 0 represented by "10". The effect is that an equal number of 0- and 1-bits are present in the bit sequence that is encoded. In correspondence hereto, a further decoding step is introduced wherein the size of each detected word is compared with the size of the corresponding reference word encoded with "1" or "0", and 2 possible scaling factors are stored. With an equal distribution between "1" and "0" words, the calculated possible scaling factors should be 50% correct, 25% too low, and 25% too high. Taking the median of the most occurring scaling factor should be a good estimate. The inventors have found that this results in good detection results. In this example, distribution graphs (not shown) are considered wherein the rescaled reference image requires an 80% rescaling. The above shows that rescaling can be handled through separate detection steps. Similarly, issues of tilting of the images may be compensated for, with a corresponding additional detection step compensating for the tilting. Alternatively, or additionally, the rescaling can also be handled by detecting word heights of the graphical representation. This may relate to OCR-detected word heights. By comparing the detected word heights to word heights of a reference text, the scaling factor may accurately be estimated.

Regarding Levenshtein distance, it is further noted that it enables reliable handling also for embodiments where carrier strings comprise more than one word, and a carrier string is split in a first part and a second part by a line break. In such cases, the Levenshtein distance enables to detect where the list mismatch occurs, to then add the bounding box widths of the first part and the second part and an equivalent word space (either unaltered or altered), to obtain the full bounding box width for the entire carrier string. In embodiments where the embedding relies only on letter spaces (not word spaces), the equivalent word space may be included as an unaltered word space by the algorithm. In embodiments where the embedding relies on both letter spaces and word spaces, the equivalent word space may be included as an altered word space by the algorithm.

**Concluding,** Example 2 illustrates that text steganography using character spacing modulation is a viable way to conceal a unique user ID in a webpage, which can be reliably extracted using off the shelf OCR software. The process can be highly automated. Possible workflows include that during authoring, the text parts of the question which can be used for encoding are detected, and the necessary html is generated (wrapping words in CSS enriched spans). Furthermore, during examination, where applicable, the device responsible for generating the graphical representation may add the necessary auto-generated CSS fragment prior to rendering the question, this way concealing a unique code for the currently authenticated user. In such cases, when an image (e.g., a screenshot) is found, the corresponding publication may be opened in the backoffice, the screenshot may be uploaded, and a dedicated webservice may be consulted which generates the necessary reference metadata, analyzes the screenshot, and returns the extracted ID, after which the participant corresponding to this user ID can be identifed. In preferred variants of the example, software features are provided to indicate, during authoring, which part of the webpage can contain encoded data. Also, software features may be provided to determine, within the image that requires decoding (e.g., screenshot) which part of the image contains the encoded data. Additionally, software features may be provided for automatically linking a discovered screenshot with the originating exam, preferably based on OCR generated text + context info. Furthermore, software features may be provided to implement the decoding algorithm as a micro service and/or a command-line tool.

### Example 3: example of embedding relating to data representation

This example is similar to Example 1 and 2, whereby more detail is provided regarding the embedding in terms of data representation.

**Similar** to Example 1, the embedding relates to concealing the digital data (unique user ID) by slightly changing the character spacing of different words within the displayed text.

**A** first aspect of this example relates to the distinction between carrier word identification, on the one hand, and formatting data generation, on the other hand. This relates to static and dynamic parts of the software for automating the text embedding. Digital information which identifies a user of a web application (e.g., a unique user ID) can be hidden in the text displayed by a web application by slightly (almost invisibly) changing the character spacing of the words in the text. In this example, CSS (Cascading Style Sheets) is used to do so.

The information encoding consists of 2 parts, one part running server side (on a web server), another part running client side (in a web browser).

The "static" part of the encoding is generated on the web server, where the HTML code of the web page to be displayed is prepared for information embedding by assigning a number of distinct CSS classes to consecutive words in the text. The generated HTML is common for all users and is downloaded to the browser of the web application user when the web content (e.g., an exam question) is requested.

The "dynamic" part is generated in the browser by embedded javascript code. Assuming that a unique user ID is known in the browser environment (e.g., stored in a browser cookie after the user has logged in to the web application) the javascript code will specify the content of the CSS classes applied to the consecutive words in the text, prior to rendering the HTML page. The generated CSS content is dependent on the unique user ID. As a result, the character spacing of certain words in the text will be altered in a unique way. This will enable a decoding algorithm to extract the user ID from a screenshot, taken from the text displayed in a browser window.

An example "original HTML content (dummy sample) of the generated HTML code clarifies the concept:

```
<html>
                <body>
       Lorem ipsum dolor sit amet, consectetur adipiscing elit, sed do
 eiusmod temper incididunt ut labore et dolore magna aliqua. Ut enim ad
 minim veniam, quis nostrud exercitation ullamco laboris nisi ut aliquip
 ex ea commodo consequat. Duis aute irure dolor in reprehenderit in
 voluptate velit esse cilium dolore eu fugiat nulla pariatur. Excepteur
 sint occaecat cupidatat non proident, sunt in culpa qui officia deserunt
 mollit anim id est laborum
               </body>
       </html>
```

This leads to following server side extended HTML content:

```
<html>
               <body>
       <span class='w00'>Lorem</span> <span class='w01'>ipsum</span>
 <span class='w02'>dolor</span> sit <span class='w03'>amet,</span> <span
 class='w04'>consectetur</span> <span class='w05'>adipiscing</span> <span
 class='w06'>elit,</span> sed do <span class='w07'>eiusmod</span> <span
 class='w08'>tempor</span> <span class='w09'>incididunt</span> ut <span
 class='w10'>labore</span> et <span class='wll'>dolore</span> <span
 class='w12'>magna</span> <span class='wl3'>aliqua.</span> Ut <span
 class='wl4'>enim</span> ad <span class='w15'>minim</span> <span
 class='wl6'>veniam,</span> <span class='wl7'>quis</span> <span
 class='w18'>nostrud</span> <span class='w19'>exercitation</span> <span
 class='w20'>ullamco</span> <span class='w21'>laboris</span> <span
 class='w22'>nisi</span> ut <span class='w23'>aliquip</span> ex ea <span
 class='w24'>commodo</span> <span class='w25'>consequat.</span> <span
 class='w26'>Duis</span> <span class='w27'>aute</span> <span
 class='w28'>irure</span> <span class='w29'>dolor</span> in <span
 class='w30'>reprehenderit</span> in <span class='w31'>voluptate</span>
 <span class='w00'>velit</span> <span class='w01'>esse</span> <span
 class='w02'>cillum</span> <span class='w03'>dolore</span> eu <span
 class='w04'>fugiat</span> <span class='w05'>nulla</span> <span
 class='w06'>pariatur.</span> <span class='w07'>Excepteur</span> <span
 class='w08'>sint</span> <span class='w09'>occaecat</span> <span
 class='w10'>cupidatat</span> non <span class='wll'>proident,</span>
 <span class='w12'>sunt</span> in <span class='wl3'>culpa</span> qui
 <span class='w14'>officia</span> <span class='w15'>deserunt</span> <span
 class='wl6'>mollit</span> <span class='wl7'>anim</span> id est <span
 class='wl8'>laborum</span>
               </body>
       </html>
```

After selecting the words in the text suitable for encoding, i.e., the carrier words (for instance, only words of a certain minimum length, excluding words containing hyphens, etc.) each consecutive word in this set is wrapped in an HTML 'span' element to which a CSS class is assigned. In this example 32 distinct CSS classes are used, named 'w00' to 'w31'. A minimum of 32 words are needed to encode a 32-bit value, additional words are again assigned the same classes sequentially, supplying redundant encoding data which increases decoding robustness.

This may then lead to following " Client side extended HTML content":

```
       <html>
               <head>
               <style>
  .w01 { letter-spacing: 1px; }
  .w02 { letter-spacing: 1px; }
  .w05 { letter-spacing: 1px; }
  .w06 { letter-spacing: 1px; }
  .w08 { letter-spacing: 1px; }
  .w10 { letter-spacing: 1px; }
  .w13 { letter-spacing: 1px; }
  .w14 { letter-spacing: 1px; }
  .w17 { letter-spacing: 1px; }
  .w19 { letter-spacing: 1px; }
  .w21 { letter-spacing: 1px; }
  .w22 { letter-spacing: 1px; }
  .w24 { letter-spacing: 1px; }
  .w27 { letter-spacing: 1px; }
  .w28 { letter-spacing: 1px; }
  .w31 { letter-spacing: 1px; }
               </style>
               </head>
       <body>
       <span class='w00'>Lorem</span> <span class='w01'>ipsum</span>
 <span class='w02'>dolor</span> sit <span class='w03'>amet,</span> <span
 class='w04'>consectetur</span> <span class='w05'>adipiscing</span> <span
 class='w06'>elit,</span> sed do <span class='w07'>eiusmod</span> <span
 class='w08'>tempor</span> <span class='w09'>incididunt</span> ut <span
 class='w10'>labore</span> et <span class='wll'>dolore</span> <span
 class='w12'>magna</span> <span class='wl3'>aliqua.</span> Ut <span
 class='wl4'>enim</span> ad <span class='w15'>minim</span> <span
 class='wl6'>veniam,</span> <span class='w17'>quis</span> <span
 class='wl8'>nostrud</span> <span class='w19'>exercitation</span> <span
 class='w20'>ullamco</span> <span class='w21'>laboris</span> <span
 class='w22'>nisi</span> ut <span class='w23'>aliquip</span> ex ea <span
 class='w24'>commodo</span> <span class='w25'>consequat.</span> <span
 class='w26'>Duis</span> <span class='w27'>aute</span> <span
 class='w28'>irure</span> <span class='w29'>dolor</span> in <span
 class='w30'>reprehenderit</span> in <span class='w31'>voluptate</span>
 <span class='w00'>velit</span> <span class='w01'>esse</span> <span
 class='w02'>cillum</span> <span class='w03'>dolore</span> eu <span
 class='w04'>fugiat</span> <span class='w05'>nulla</span> <span
 class='w06'>pariatur.</span> <span class='w07'>Excepteur</span> <span
 class='w08'>sint</span> <span class='w09'>occaecat</span> <span
 class='w10'>cupidatat</span> non <span class='wll'>proident,</span>
 <span class='w12'>sunt</span> in <span class='wl3'>culpa</span> qui
 <span class='wl4'>officia</span> <span class='w15'>deserunt</span> <span
 class='wl6'>mollit</span> <span class='w17'>anim</span> id est <span
 class='w18'>laborum</span>
               </body>
       </html>
```

As clear from this example code, the client side javascript code, running in the browser of the logged in user, defines the actual content of the CSS classes. More specifically, in this example the unique user ID defines which of the 32 classes will apply a 1-pixel change in character spacing for the words on which these classes are applied. As a result, the text will contain a unique combination of altered character spacings in the displayed text. Thereby, it is noted that in the example code, words for which letter spacing is not altered go unmentioned. For instance, in the above code, code snippets such as ".w03 { letter-spacing: 0px; }" can be inserted to be implicitly represented.

For the sake of clarity, in the above example the generated CSS class content is shown as an HTML <style> element dynamically added to the header of the HTML page prior to page rendering. In a preferred embodiment the CSS class content can also be dynamically applied through the execution of javascript code instead of by extending the HTML content.

Another aspect of this example relates to specifying the word list, suitable for encoding, or, equivalently, to identifying the carrier words. As a first step, the part of the text in the web page, used for data encoding, needs to be specified. This can be done by the author by manually selecting the appropriate text in an authoring tool, or it can be done automatically by an algorithm extracting a text with suitable length from the original HTML content. As a next step, the selected text is split into a list of individual words, and this list is filtered to contain only the words suitable for data encoding. As an example, only words of a certain minimum length (e.g., 4 characters or more) can be retained. This restriction will assure that the overall change in individual word length, caused by the altered character spacing within the word, will be sufficiently large to be detected by the OCR software used for data decoding. As another example, words containing a hyphen can be excluded, as these words may or may not be displayed on 2 different text lines when displayed in a browser, depending on the current browser screen size. In an alternative implementation, a word containing a hyphen might be split in 2 separate parts which can each be added to the word list, providing that the decoding algorithm takes into account that in the web browser a word ending with hyphen may possibly be collated with the next word to be displayed as 1 contiguous word containing a hyphen.

Another aspect of this example relates to adding CSS classes to the HTML content. Given the list of words suitable for data encoding, the HTML of the web page is modified, by wrapping each of the words in a <span> element and sequentially applying a different CSS class to each of those elements. The number of different CSS classes used in this process determines the size of the data which can be encoded. In order to encode a 32-bit ID, 32 distinct CSS classes need to be defined, and the word list needs to contain a minimum of 32 suitable words for data encoding. Additional words are again assigned the same sequence of CSS classes. The decoding algorithm can make use of this redundant encoding data to increase decoding robustness in case the screenshot to be decoded contains excessive noise or geometric distortion.

Another aspect of this example relates to calculating the encoding data. Generating the actual CSS content typically is done at the client side, in the browser, where the rendered HTML can be adapted for each individual logged-in user. As a first step in this part of the encoding, the actual data to be encoded needs to be defined. This can be a user ID which is directly encoded into the web text as, e.g., a 16-bit unique value. Alternatively, it is possible to add an additional encoding step, for instance to ensure an equal distribution of digital 0 and 1 values in the encoded digital data. Since each of both binary values represents a certain character spacing for each word after encoding, an equal distribution of both values will ensure that the overall displayed text length will be approximately the same for all encoded user ID values. In a possible implementation, an original 16-bit user ID may be converted to a 32-bit value by replacing a 0 value for each bit with a "01" 2-bit sequence, and a 1 value with a "10" sequence. This conversion results in a 32-bit value with equal amount of 0 and 1 values for all bits. Other conversion implementations may be considered, hereby optimizing the balance between number of required encoding bits and amount of deviation from an optimal 0/1 balance.

Another aspect of this example relates to generating the CSS content. After calculating the binary code to be encoded, each bit of the code specifies the content of the equivalent CSS class, hereby selecting 1 of 2 possible contents for the CSS class. It is clear that encoding a 32-bit value this way will require the use of 32 distinct CSS classes in the earlier encoding steps. Since a CSS class can alter many visual aspects of the HTML content it is applied to, there are also many possibilities to implement the actual text steganography. In one implementation proposed here, the inter-character spacing of a word can be increased with a small value to encode a binary 1-value, while a binary 0-value leaves the inter-character spacing on its default value. To obtain this, the javascript code in the browser can specify some of the CSS classes to have an empty content (leaving the text unchanged) while other CSS classes have as content "letter-spacing: 1px;", which indeed increases the inter-character spacing with a small value. Other encoding implementations may alter other style elements of a word, as for instance the used font family, font style, font weight, vertical or horizontal position, etc. However, the use of inter-character space modulation gives an optimal combination of efficiently concealing the fact that data is hidden in the text, and still being able to decode the concealed data in a robust way.

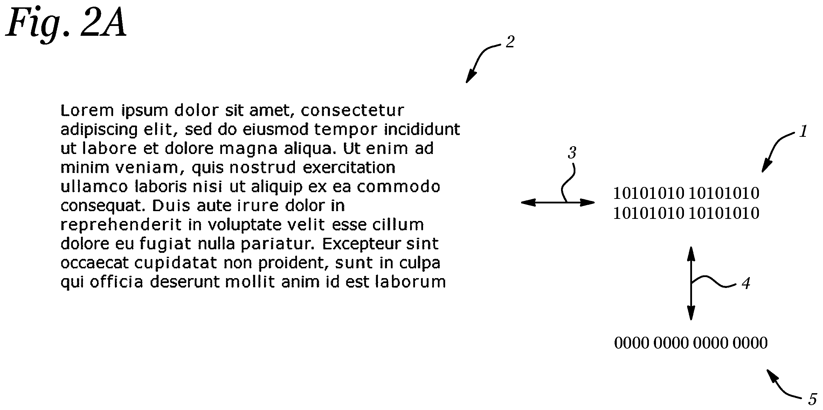

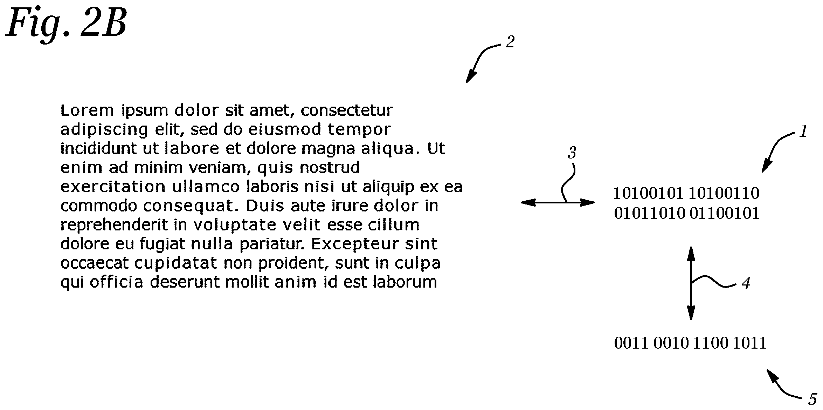

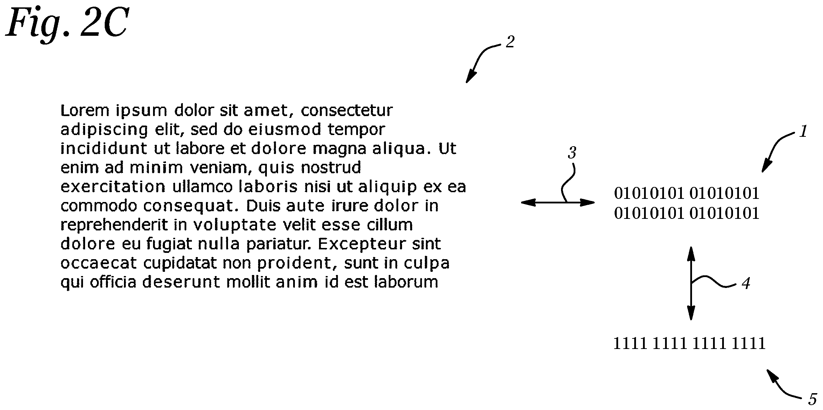

Reference is made to Figure 2A-2C, showing three examples of embedding 3 of the same text string with different input bit sequences 5 of length sixteen bit (codes), which are converted 4 to bit sequences 1 of length thirty-two bit before embedding 3, leading to graphical representations 2. For Figure 2A, this relates to embedding of the input bit sequence 5 with value 0000 0000 0000 0000. By representing each 0 by "10", and each 1 by "01", the actual bit sequence 1 for embedding is obtained, being 10101010 10101010 10101010 10101010. For Figure 2B, this relates to embedding of the input bit sequence 5 with value 0011 0010 1100 1011, the actual bit sequence 1 for embedding being 10100101 10100110 01011010 01100101. For Figure 2C, this relates to embedding of the bit sequence 5 with value 1111 1111 1111 1111, the actual bit sequence 1 for embedding being 01010101 01010101 01010101 01010101.

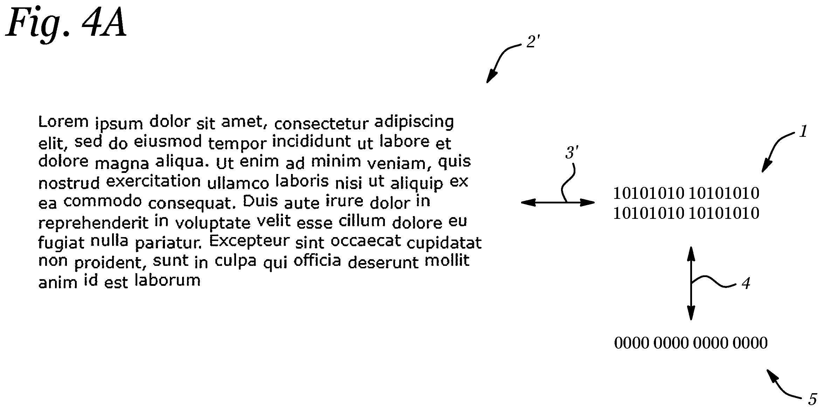

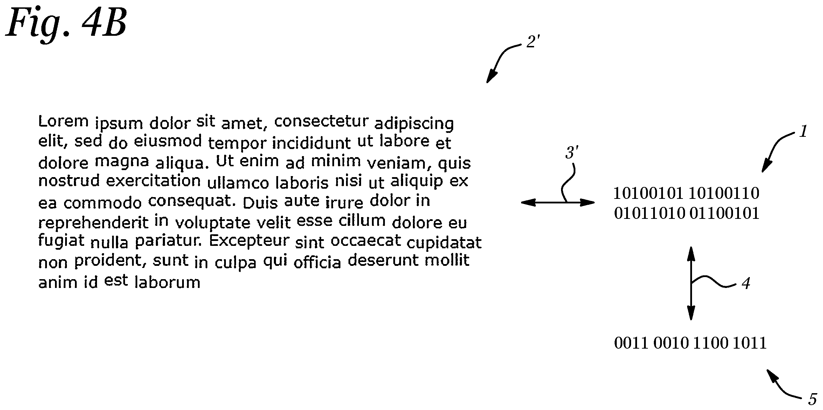

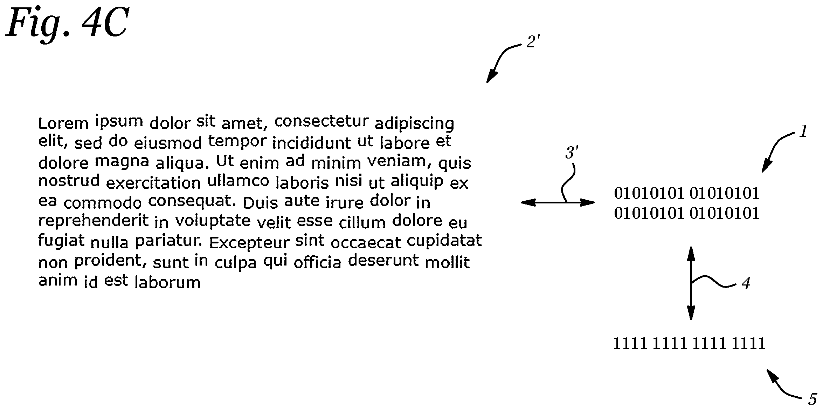

Related, Figure 4A-4C show three examples of vertical-word-shift-based embedding 3' of the same text string with different input bit sequences 5 of length sixteen bit (codes), which are converted 4 to bit sequences 1 of length thirty-two bit before embedding 3', leading to graphical representations 2'. The input bit strings of Fig. 4A-4C and their conversion to bit strings is the same as for Fig. 2A-2B, the difference relating merely to the different embedding, being a vertical-word-shift-based embedding 3'.

### Example 4: encoding and decoding involving carrier strings consisting of more than one word

Example 4 is essentially the same as example 1. In variants, it is the same as example 2. Thereby, the sole difference is that carrier strings may now span more than one carrier word, wherein the carrier string consists of these words. In this example, the carrier string consists of carrier words that are subsequent carrier words in the sequence as defined by the text string. Correspondingly, the decoding relates to detecting the lengths of carrier strings. In variants (not considered here), the carrier string may consist of carrier words that are not subsequent carrier words.

Particularly, in this example, each carrier string is a sequence of one or more carrier words, wherein the carrier string is identified as comprising at least three letter spaces in total, and only letter spaces are altered. In the embedding, the text string is divided in carrier strings by going over the text string word by word, starting a new carrier string whenever the current carrier string is found to have a number of letter spaces that is at least the pre-determined number, this number being three. All carrier strings are thus sequences of one, two or more than two words, i.e. the number needed to get to at least three letter spaces. All words belong to a carrier string, as words with length one are automatically included in the present carrier string being formed. Line breaks in the graphical representation do not impact the decoding, as the splitting of carrier strings across lines does not cause a loss of information with respect to any of the letter spaces, leading to robust decoding.

### Example 5: encoding and decoding involving carrier strings comprising word spaces

Example 5 is essentially the same as example 1. In variants, it is the same as example 2. Thereby, the sole difference is that carrier strings may now span more than one word of the text string, including the word spaces. In this example, all words of the text string are carrier words, as well as the word spaces therebetween, and the carrier string is hence definable merely by a start position and a stop position with respect to the text string. In this example, the carrier string is such that start and stop positions coincide with start and stop positions of words, so that a carrier string matches a sequence of words, including the word spaces therebetween. Correspondingly, the decoding relates to detecting the lengths of carrier strings. In variant examples (not considered further), start and stop positions may be chosen arbitrarily, i.e., without being matched with start and stop positions of words. In yet other variants (not considered further), the carrier string may consist of a combination of more than one pair of start position and stop position.

Particularly, in this example, the identifying of carrier words is such that the carrier string comprises at least two spaces, regardless of whether it concerns letter spaces or word spaces. The altering of the spaces for the embedding of the respective bit relates to altering each of the spaces. This may relate to using the "letter-spacing" command, thereby altering the letter spacing directly, but also the word spacing, as the word spacing may be the sum of a fixed word space offset and this alterable letter spacing. Each carrier string is a sequence of one or more carrier words, wherein the carrier string is identified as comprising at least two spaces in total, wherein both letter spaces and word spaces are counted, and both are altered according to the invention. For the embedding, the text string is divided in carrier strings by going over the text string word by word, starting a new carrier string whenever the current carrier string is found to have a total number of spaces (letter spaces plus word spaces) that is at least three. Carrier strings are sequences of one, two or more than two words, and all words belong to a carrier string, as words with length one are included in the carrier string that is currently being formed. Line breaks may impact the decoding, as the splitting of carrier strings across lines may cause a loss of information with respect to one of the word spaces. In this example, this is compensated for by preventing breaks between these words, allowing line breaks only to occur between carrier strings. This leads to robust decoding.

### Example 6: illustration of graphical representation of text strings in the context of the invention

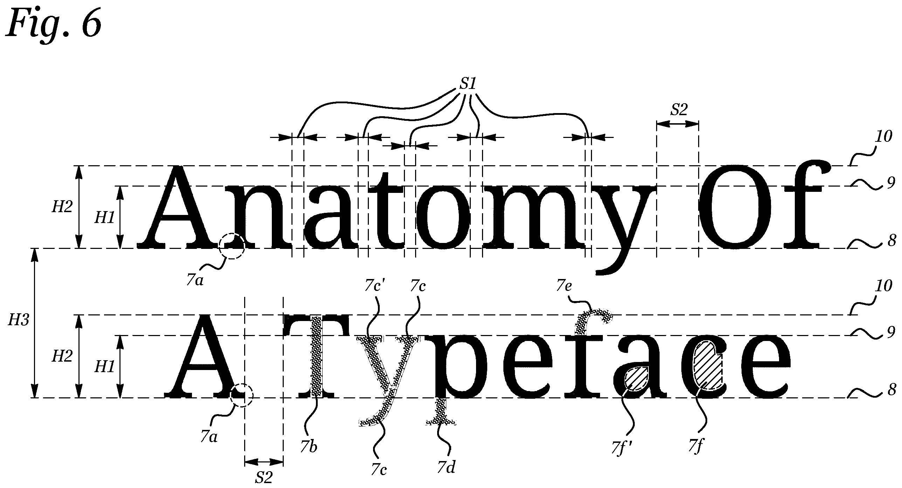

Example 6 illustrates the graphical representation of text strings in the context of the invention. It assumes a given typeface, such as the exemplary one illustrated in Figure 6. It may thereby introduce terminology which may be used as a definition for certain terminology relating to data formatting, without limiting this terminology to what is illustrated in this example. Reference is made to Figure 6, illustrating formatting-related features of an example graphical representation of a text string, including letter spaces S1 and word spaces S2.

Figure 6 shows an arbitrary text string "Anatomy of A Typeface", represented on two lines, with a line break between the first line of text, "Anatomy of", and the second line of text, "A Typeface". For each of the two lines of text, a baseline 8 is the imaginary line, preferably not visible in the graphical representation, upon which the line of text rests.

Three heights (H1, H2, H3) are defined with respect to the baseline 8. The height H1, also called the X-height, defines the distance between the baseline 8 and the mean line of lowercase letters 9 given the typeface. The height H2, also called the cap height, defines the distance between the baseline 8 and the mean line of capital letters 10 for the given typeface. The height H3, also called the leading, defines the distance between adjacent lines for the given typeface; in this example, the leading is defined as the distance between adjacent baselines 8.

Within lines, two spaces (S1, S2) are defined. In this example, the space S1, also called the letter space or "letter spacing" or "character space" or "character spacing" or "intra-word space" or "intra-word spacing", is defined by the distance between letters or characters belonging to the same word or, equivalently, the distance (preferably, horizontal distance) between characters of word-space-free substrings of the text string. In this example, the space S2, also called the word space or "word spacing" or "inter-word space" or "inter-word spacing", is defined by the distance between subsequent words or, equivalently, the distance (preferably, horizontal distance) between subsequent word-space-free substrings of the text string. In this example, words are shown according to a horizontal graphical representation, and the letter space S1 is defined between the right-most portion of a character and the left-most portion of the next character, as illustrated by the vertical imaginary lines of Figure 6. Likewise, the word space S2 is defined between the right-most portion of a word and the left-most portion of the next word. In a variant example (not further considered), the letter space and/or word space may be defined differently, e.g., with reference to mean distance between the glyphs of the characters. In another variant example (not further considered), the letter space and word space may implicitly define a word space offset W1 through the equation S2 = S1+W1. In another variant example (not further considered), the letter space and word space may be defined in function of the width W0 of the typographical unit referred to as "space" (identifiable, e.g., with ascii code 32, or unicode U+0020), through the equation S2=W0+2*S1. In other variant examples (not further considered), the lines may be vertical lines, whereby spaces (S1, S2) are defined as vertical distances, and the heights (H1, H2, H3) as horizontal distances. In yet other variant examples (not further considered), the lines are curved, and spaces and heights are defined as distances relative to these curves.

For each character, several character features (7a-7f') of the graphical representation may be identified. The serif 7a may be present (as shown) or absent (as in the case of a sans serif typeface, not shown). Certain characters may exhibit a stem 7b, as illustrated for the capital letter "T", and/or one or more strokes 7c, 7c', as illustrated for the lowercase letter "y", with a main stroke 7c and a further stroke 7c'. A stroke may thereby be one of the main lines that make up the appearance of the character. Stems may be considered main strokes that are more or less straight and/or not part of a bowl. A descender 7d may relate to the portion of the character extending below the baseline 8, as illustrated for the lowercase letter "p". An ascender 7e may relate to the portion of a lowercase character extending above the mean line of lowercase characters. An aperture or counter (7f, 7f) may relate to an area partially or entirely enclosed by a portion of the character. The case of an open counter 7f is illustrated for the lowercase character "c". The case of a closed counter 7f is illustrated for the lowercase character "a".

As discussed in this document, the invention may preferably relate at least to the altering of the letter space S1. However, it may additionally relate to altering any or any combination of the word space S2, the word space offset W1, the width W0 of the typographical unit "space", any of the heights H1-H3, a shape or dimension of a character or a shape or dimension or color or contrast or appearance of a feature 7a-7f' of the character, such as serif or a stem or a stroke or a descender or an ascender or an aperture.

### Example 7: encoding and decoding with uneven letter spacing

This example is essentially the same as Example 2, except that now, the letter spacing is different for different words belonging to the same carrier string, and the altering of letter spacing is not expressed in pixels but relative to the font (with "em"). With reference to the " Client side extended HTML content" of Example 2, this may relate to alternative HTML code, e.g.,

```
        <style>
        .w01a {letter-spacing: 0.05em}
        .w01b {letter-spacing: 0.2em}
         
       <span class = 'w0la'>Lorem</span><span class = 'w01b'>
 </span><span class = 'w01a'>ipsum</span>
```

In variants of this example, the letter spacing is also different for words belonging to different carrier strings, with variance (e.g., randomized variance) accross different letter spacings, or even different letter spacing alterations within the same word. The invention still enables succesfull decoding in these cases, especially if altered spacing is only applied for one value of the bit (0 or 1), and not for the other value, and the variance is limited. Indeed, for reliable decoding, it is sufficient that the decoder detects *that* the spacing has been altered, and the absolute value of the alteration may be of lesser importance.

### (End of example 7)

In the above, several examples are given wherein the altering of each of the letter spaces (S1) and/or each of the word spaces (S2) relates to a same pre-determined first delta if the value of the bit is zero and a same pre-determined second delta if the value of the bit is one, whereby the first and second delta are non-negative values, or, equivalently, increments. However, the invention may equally provide a negative value for one of the first and second delta. In example embodiments, the difference between the first and second delta may be a distance of x0 mm, wherein the first delta is, e.g., - x0/2 or - x0/3 or -x0/4, and the second delta is, e.g., x0/2 or 2*x0/3 or 3*x0/4, respectively. Such embodiments may have the advantage of leading to a smaller total length for the encoded text string. Such embodiments may be particularly advantageous in combination with fonts with wide horizontal spacing, for which a slight reduction of letter spacing and/or word spacing may be acceptable. Moreover, the invention equally includes embodiments wherein the altering of each of the letter spaces and/or each of the word spaces relates to a first set of different delta-values if the value of the variable is a first value and a second set of different delta-values if the value of the variable is a second value. Hence, the invention is not limited to having a same first delta and a same second delta for all letter spaces. Likewise, the invention is not limited to having a same first delta and a same second delta for all word spaces.

## Claims

1. A method for embedding a bit sequence (1), comprising:
providing the bit sequence (1) and a text string comprising words;
identifying, among the words comprised in the text string, carrier strings suitable for embedding;
generating formatting data associated with said text string, said formatting data comprising instructions for embedding, within the respective identified carrier strings, respective bits of the bit sequence;
wherein the identifying of carrier strings comprises identifying, for each carrier string, one or more carrier words such that the carrier string comprises at least two spaces (S1, S2), the spaces being letter spaces (S1) or word spaces (S2);
wherein the embedding of a respective bit relates to altering each of the letter spaces (S1) **and/or** each of the word spaces (S2) of the respective carrier string so that the sum of altered spaces if the value of the bit is zero is distinguishable from the sum of altered spaces if the value of the bit is one.

2. The method of claim 1, wherein the altering of each of the letter spaces (S1) **and/or** each of the word spaces (S2) relates to a same pre-determined first delta if the value of the bit is zero and a same pre-determined second delta if the value of the bit is one.

3. The method of claims 1-2, wherein the identifying of carrier strings comprises identifying, for each carrier string, one or more carrier words such that the carrier string comprises at least two letter spaces (S1); and wherein said altering of the spaces for the embedding of the respective bit relates to altering each of the letter spaces (S1) present in the carrier string;
wherein **preferably** each carrier string is a single carrier word identified as comprising at least two letter spaces (S1).

4. The method of claims 1-2, wherein the identifying of carrier words is such that the carrier string comprises at least two spaces (S1, S2) including at least one word space (S2); and wherein the altering of the spaces for the embedding of the respective bit relates to altering each of the spaces (S1, S2) including the at least one word space (S2).

5. The method of claims 1-4, further comprising:
generating (3), based on the text string and the formatting data, a graphical representation (2) of an encoded text string, for display on a screen and/or for printing, the encoded text string comprising the text string with the bit sequence embedded therein.

6. The method of claims 2-5, wherein the formatting data is expressed in pixels, and wherein the first delta and the second delta relate to a first number of pixels and a second number of pixels, wherein preferably one of the pre-determined first and second number of pixels is zero;
wherein **preferably** a difference between the pre-determined first and second number of pixels is one, whereby preferably one of the first and second number of pixels is zero and the other one of the first and second number of pixels is one.

7. The method of claims 1-6,
wherein the identifying of carrier words further comprises determining whether the word does not contain hyphens **and/or** further comprises determining whether the word does not exceed a pre-determined maximum dimension relating to a medium for graphical representation of the text string with the bit sequence embedded therein;
**and/or**
wherein the identifying of carrier words further comprises generating carrier word identification data; wherein said embedding of respective bits of the bit sequence is performed for said bit sequence and for a second bit sequence based on the same carrier word identification data;
**and/or**
wherein the method further comprises:
- receiving an input bit sequence (5);
- calculating (4), based on the input bit sequence (5), said bit sequence;
wherein the bit sequence calculation comprises adding extra bits to the input bit sequence (5), the extra bits relating to parity bits for error correction **and/or** to padding bits for controlling the relative share of zeros and ones in the bit sequence.

8. The method of claims 1-7, wherein the formatting data comprises cascading style sheet, CSS, code comprising a letter-spacing property for altering the word space (S1) of one of the carrier words.

9. A method for decoding an encoded text string, comprising:
- receiving a graphical representation (2) of the encoded text string comprising the text string with the bit sequence (1) embedded therein,
- receiving the words of the text string, **preferably** by detecting the words of the text string in the encoded text string by means of optical character recognition, OCR and based on the graphical representation (2);
- detecting lengths of carrier strings, preferably of carrier words, present in the graphical representation;
- assigning, based on the detected carrier string lengths and the words of the text string, respective detected carrier string lengths to respective carrier strings of the text string, preferably detected carrier word lengths to respective carrier words;
- determining, based on the respective carrier strings of the text string and their detected carrier string lengths, the respective bits of the embedded bit sequence.

10. The method of claim 9, wherein the detecting of the carrier string lengths of the carrier strings present in the graphical representation is based on bounding box detection.

11. The method of claims 9-10, wherein the assigning of respective detected carrier string lengths to respective carrier strings of the text string is based on calculating Levenshtein distance.

12. An encoder system, comprising:
- a carrier string identification means;
- a formatting means;
- **preferably,** a graphical representation means;
wherein the carrier word identification means is configured for:
- receiving a text string comprising words;
- identifying, among the words comprised in the text string, carrier strings suitable for embedding such that the carrier string comprises at least two spaces (S1, S2), the spaces being letter spaces (S1) or word spaces (S2);
- generating, based on said identification, carrier string identification data;
wherein the formatting means is configured for:
- receiving the text string;
- receiving a bit sequence;
- receiving the carrier string identification data;
- generating formatting data associated with said text string, said formatting data comprising instructions for embedding, within the respective identified carrier strings, respective bits of the bit sequence, said embedding of a respective bit relating to altering each of the letter spaces **and/or** each of the word spaces (S2) of the respective carrier string so that the sum of altered spaces if the value of the bit is zero is distinguishable from the sum of altered spaces if the value of the bit is one;
wherein **preferably** the graphical representation means is configured for:
- receiving the text string;
- receiving the formatting data;
- generating, based on the text string and the formatting data, a graphical representation (2) of the text string with the bit sequence embedded therein, for display on a screen and/or for printing.

13. A decoder system, configured for carrying out a method according to claims 9-11.

14. A digital data file representing a text document with embedded data, the file comprising a text string, and formatting data comprising instructions for altering each of the letter spaces (S1) and/or word spaces (S2) of carrier strings comprised in the text string for said embedding of data, wherein each of the carrier strings comprises at least two spaces (S1, S2), and wherein at least one substring of the text string does not have the same altered letter spaces (S1) and/or not the same altered word spaces (S2).

15. A computer program product comprising instructions which, when executed on a processor, cause the processor to execute a method according to claims 1-8 and/or a method according to claims 9-11.
